# EUROPÄISCHE PATENTSCHRIFT

(11) **EP 0 992 546 B1**
(45) Veröffentlichungstag und Bekanntmachung des Hinweises auf die Patenterteilung: **26.06.2002**
(21) Anmeldenummer: 99118910.1
(22) Anmeldetag: 24.09.1999
(51) Int. Cl.: C09B 67/22, D06P 1/384, C09B 62/51

(54) **Farbstoffmischungen von wasserlöslichen faserreaktiven Azofarbstoffen, Verfahren zu ihrer Herstellung und ihre Verwendung**
Mixtures of water soluble reactive azo dyes, process to manufacture them and their use
Mélanges de colorants azoiques réactifs aquasolubles, leur procédé de fabrication et leur utilisation

(30) Priorität: 30.09.1998 DE 19844841
(43) Veröffentlichungstag der Anmeldung: 12.04.2000
(73) Patentinhaber: DyStar Textilfarben GmbH & Co. Deutschland KG, 60318 Frankfurt am Main (DE)
(72) Erfinder: Gröbel, Bengt-Thomas, Dr., 65529 Waldems (DE); Schumacher, Christian, Dr., 65779 Kelkheim (DE); Lippert, Gerhard, 65719 Hofheim (DE); Schaffeld, Mieke, 65520 Bad Camberg (DE); Röhrig, Dierk, 12040 Jakarta (ID); Krieger, Karl, 65510 Hünstetten (DE)

(56) Entgegenhaltungen:
- EP-A- 0 668 328
- EP-A- 0 735 112
- DE-B- 2 442 553
- FR-A- 2 749 314
- PATENT ABSTRACTS OF JAPAN vol. 013, no. 442 (C-641), 3. Oktober 1989 (1989-10-03) & JP 01 170661 A (MITSUBISHI KASEI CORP), 5. Juli 1989 (1989-07-05)

## Beschreibung

Die Erfindung liegt auf dem technischen Gebiet der faserreaktiven Azofarbstoffe.

Aus der japanischen Patentanmeldungs-Veröffentlichung Hei-1-170 661 sind Mischungen von gelbfärbenden Monoazofarbstoffen mit einer faserreaktiven Gruppe der Vinylsulfonreihe bekannt, die jedoch gewisse anwendungstechnische Mängel aufweisen.

Auch bei der Anwendung von. Farbstoffmischungen ist es wichtig, Färbungen mit guter Farbausbeute zu erhalten, d. h. Färbungen, deren Farbtiefe im Verhältnis zu eingesetzter Farbstoffmenge aufgrund der Farbeigenschaft der Farbstoffmischung und aufgrund deren färberischen Verhaltens, wie gutes Ausziehvermögen und hoher Fixierwert, möglichst hoch ist. In der Regel ist die Farbausbeute, die mit einer Farbstoffmischung aus zwei Farbstoffen erhalten wird, das Mittel der Summe der Farbausbeuten der Einzelfarbstoffe. Die Farbausbeute einer Mischung von zwei Farbstoffen wird deshalb geringer sein als die Farbausbeute desjenigen Einzelfarbstoffes mit der größeren Farbausbeuteeigenschaft.

Mit der vorliegenden Erfindung wurden nunmehr Farbstoffmischungen gefunden, die Färbungen mit einer Farbausbeute liefern, die überraschenderweise deutlich höher liegt als das Mittel der Summe der Farbausbeuten der Färbungen der Einzelfarbstoffe der Farbstoffmischung. Dieser synergistische Effekt zeigt sich zudem in einem verbesserten Aufbauverhalten der erfindungsgemäßen Mischung gegenüber den einzelnen Farbstoffen der Mischung.

Die Erfindung betrifft somit Farbstoffmischungen, die einen oder mehrere, wie zwei oder drei, bevorzugt 1 oder 2, Farbstoffe aus der Gruppe der Farbstoffe der nachstehend angegebenen und definierten allgemeinen Formel (1) und einen oder mehrere, wie zwei oder drei, bevorzugt 1 oder 2, Farbstoffe aus der Gruppe der Farbstoffe der nachstehend angegebenen und definierten allgemeinen Formel (2) im molaren Verhältnis des/der Farbstoff(e) (1) zu dem/den Farbstoff(en) (2) von 75 : 25 bis 25 : 75, bevorzugt von 65 : 35 bis 35 : 65 und insbesondere bevorzugt von 60 : 40 bis 40 : 60, enthalten.

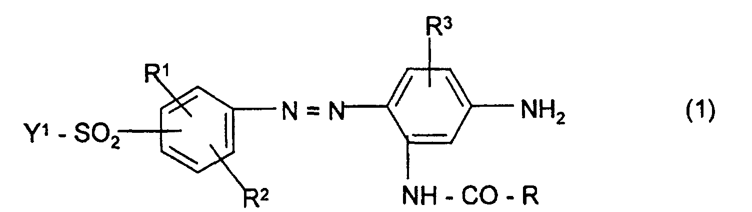

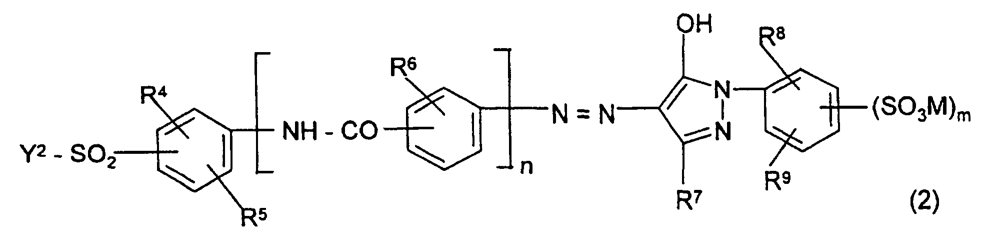

In diesen Formeln bedeuten:
- M: ist Wasserstoff oder ein Alkalimetall, wie Natrium, Kalium oder Lithium;
- Y¹: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Y²: hat eine der Bedeutungen von Y¹;
- R¹: ist Wasserstoff, Chlor, Alkyl von 1 bis 4 C-Atomen, wie Ethyl und insbesondere Methyl, Alkoxy von 1 bis 4 C-Atomen, wie Ethoxy und insbesondere Methoxy, Carboxy oder Sulfo, bevorzugt Wasserstoff, Methyl und Methoxy und insbesondere Wasserstoff;
- R²: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, bevorzugt Wasserstoff, Methyl und Methoxy und insbesondere Wasserstoff;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo, bevorzugt Wasserstoff, Methyl und Methoxy und insbesondere Sulfo, wobei R³ bevorzugt in para-Stellung zur Gruppe -NH-CO-R steht;
- R: ist Amino oder Alkyl von 1 bis 6 C-Atomen, bevorzugt von 1 bis 3 C-Atomen, wie Ethyl und insbesondere Methyl, wobei das Alkyl substituiert sein kann, wie beispielsweise durch Hydroxy, Sulfo, Carboxy, Sulfato, Phosphato oder eine Gruppe -SO₂-Y³ mit Y³ einer Bedeutung von Y¹ ;
- R⁴: ist Wasserstoff, Chlor, Alkyl von 1 bis 4 C-Atomen, wie Ethyl und insbesondere Methyl, Alkoxy von 1 bis 4 C-Atömen, wie Ethoxy und insbesondere Methoxy, oder Sulfo, bevorzugt Wasserstoff, Methyl und Methoxy und insbesondere Wasserstoff;
- R⁵: ist Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, bevorzugt Wasserstoff, Methyl und Methoxy und insbesondere Wasserstoff;
- R⁶: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Sulfo und ist bevorzugt Wasserstoff, Methyl, Methoxy und Sulfo und insbesondere bevorzugt Wasserstoff;
- n: ist die Zahl Null oder 1;
- R⁷: ist Methyl oder Carboxy;
- R⁸: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Chlor, bevorzugt Methyl und Chlor und insbesondere bevorzugt Wasserstoff;
- R⁹: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, oder Chlor und ist bevorzugt Wasserstoff;
- m: ist die Zahl Null, 1 oder 2, bevorzugt 1 oder 2 und insbesondere bevorzugt 1 (wobei im Falle von m gleich Null diese Gruppe für Wasserstoff steht);
- die Gruppen Y¹-SO₂- und Y²-SO₂-: stehen bevorzugt in meta-Stellung und insbesondere bevorzugt in para-Stellung zur Azogruppe bzw. zur Gruppe -NH-CO- an den Benzolkern gebunden;
- die Gruppe -NH-CO-: steht in Formel (2) in meta-Stellung und bevorzugt in para-Stellung zur Azogruppe an den Benzolkern gebunden.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Die Farbstoffe der allgemeinen Formeln (1) und (2) sind allgemein bekannt und beispielsweise aus der europäischen Patentanmeldungs-Veröffentlichung Nr. 0 073 481, der britischen Patentschrift Nr. 1 124 388 und den deutschen Patentschriften Nrs. 1 282 213 und 1 206 107 beschrieben.

Von den in der erfindungsgemäßen Farbstoffmischung enthaltenen Farbstoffen der allgemeinen Formel (1) sind insbesondere diejenigen hervorzuheben, bei denen die Gruppe Y¹-SO₂- in meta- und insbesondere bevorzugt in para-Stellung zur Azogruppe steht, Y¹ Vinyl und bevorzugt β-Sulfatoethyl ist, R¹ und R² beide unabhängig voneinander Wasserstoff, Methyl oder Methoxy bedeuten, hiervon bevorzugt Wasserstoff sind, R³ Sulfo ist und in para-Stellung zur Gruppe -NH-CO-R an den Benzolkern gebunden ist und R Methyl bedeutet.

Von den in der erfindungsgemäßen Farbstoffmischung enthaltenen Farbstoffen der allgemeinen Formel (2) sind bevorzugt solche, in denen n gleich Null ist, die Gruppe Y²-SO₂- in meta- oder para-Stellung zur Azogruppe gebunden ist, R⁴ Wasserstoff, Methyl oder Methoxy ist, R⁵ Wasserstoff oder Methyl ist, R⁸ und R⁹ beide Wasserstoff bedeuten und m die Zahl 1 ist, wobei diese Sulfogruppe bevorzugt in para-Stellung zum N-Atom des Pyrazolonringes an den Benzolkern gebunden ist; hiervon sind bevorzugt diejenigen Monoazofarbstoffe der allgemeinen Formel (2), in welchen R⁴ und R⁵ beide Wasserstoff bedeuten und die Gruppe Y²-SO₂- in para-Stellung zur Azogruppe gebunden ist.
Des weiteren sind von den Monoazofarbstoffen der allgemeinen Formel (2) in der erfindungsgemäßen Mischung diejenigen mit n gleich 1 von besonderem Interesse, in welchen R⁴ und R⁵ beide Wasserstoff bedeuten, die Gruppe Y²-SO₂- in meta-Stellung oder bevorzugt in para-Stellung zur Gruppe -NH-CO- steht und Y² Vinyl oder β-Sulfatoethyl und bevorzugt β-Sulfatoethyl ist, die Gruppe -NH-CO- in meta- oder bevorzugt in para-Stellung zur Azogruppe gebunden ist, R⁶ Wasserstoff bedeutet, R⁸ und R⁹ beide Wasserstoff sind und m die Zahl 1 ist, wobei diese Sulfogruppe bevorzugt in para-Stellung zum N-Atom des Pyrazolonringes an den Benzolkern gebunden ist.

Die Farbstoffe der allgemeinen Formel (1) können, insbesondere bei gleichem Chromophor, innerhalb der Bedeutung von Y¹ unterschiedliche faserreaktive Gruppen -SO₂-Y¹ besitzen (gleiches gilt auch für die Farbstoffe der allgemeinen Formel (2) bezüglich Y² und Y³). Insbesondere können die Farbstoffmischungen Farbstoffe gleichen Chromophors entsprechend der allgemeinen Formel (1) und/oder Farbstoffe gleichen Chromophors entsprechend der allgemeinen Formel (2) enthalten, in denen die faserreaktiven Gruppen -SO₂-Y¹ (bzw. -SO₂-Y² und -SO₂-Y³) zum einen Vinylsulfonylgruppen und zum anderen β-Chlorethylsulfonyloder β-Thiosulfatoethylsulfonyl- oder bevorzugt β-Sulfatoethylsulfonyl-Gruppen sind. Enthalten die Farbstoffgemische die jeweiligen Farbstoffkomponenten teilweise als Farbstoff mit der Vinylsulfonylgruppe, so liegt der Farbstoffanteil des jeweiligen Farbstoffes mit der Vinylsulfonylgruppe bis zu etwa 30 Mol-%, bezogen auf den jeweiligen Farbstoffchromophor, vor.

Gruppen entsprechend den allgemeinen Formeln (3a) und (3b) 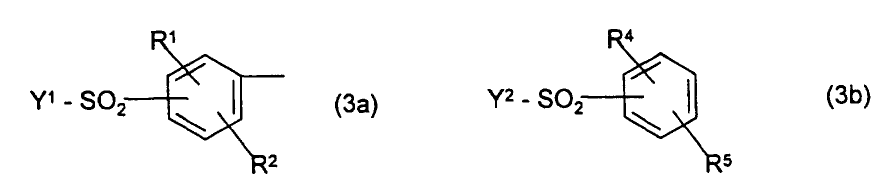 die in den Farbstoffen (1) und (2) enthalten sind; sind beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethyl-sulfonyl)-phenyl, 4-Methyl-3-(β-sulfatoethylsulfonyl)-phenyl, 2,5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl und 2-Sulfo-4-(β-sulfatoethylsulfonyl)-phenyl, hiervon insbesondere 4-(β-Sulfatoethylsulfonyl)-phenyl, sowie deren Derivate, in welchen die β-Sulfatoethylsulfonyl-Gruppe durch die Vinylsulfonyl- oder β-Thiosulfatoethylsulfonyl- oder β-Chlorethylsulfonyl-Gruppe ausgetauscht ist.

Die erfindungsgemäßen Farbstoffmischungen lassen sich in an und für sich üblicher Verfahrensweise herstellen, so beispielsweise durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können, oder durch chemische Synthese in einer Eintopf-Reaktion, so beispielsweise durch Einsatz der Diazokomponenten und Kupplungskomponenten der Einzelfarbstoffe im selben Reaktionsansatz. Solche Syntheseweisen sind dem Fachmann geläufig. Beispielsweise kann man in der Weise vorgehen, daß man eine oder mehrere, wie zwei oder drei, Anilinverbindungen der allgemeinen Formel (4a) und eine oder mehrere, wie zwei oder drei, Anilinverbindungen der allgemeinen Formel (4b)

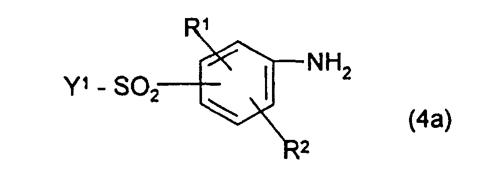

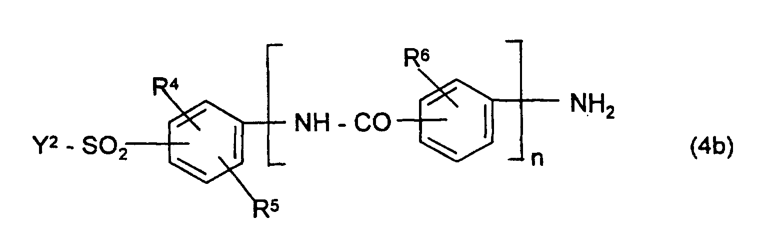

in welchen die einzelnen Formelglieder die obengenannten Bedeutungen haben, zusammen im selben Reaktionsansatz in Gegenwart einer oder mehrerer, wie zwei oder drei, Verbindungen der allgemeinen Formel (5a) und einer oder mehreren, wie zwei oder drei, Verbindungen der allgemeinen Formel (5b) 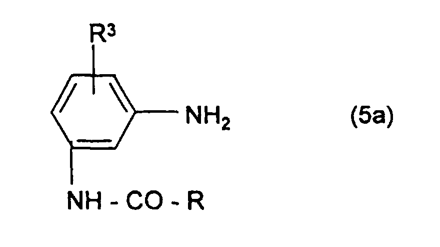 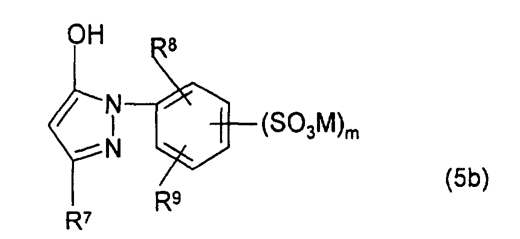 in welchen die einzelnen Formelglieder die obengenannten Bedeutungen haben, jeweils in den entsprechenden Anteilen, in üblicher Verfahrensweise diazotieren, beispielsweise in salz- oder schwefelsaurem Medium mittels salpetriger Säure, wie beispielsweise bei einem pH-Wert unterhalb von 2,5 und einer Temperatur zwischen -5°C und +10°C, und die erhaltenen Diazoniumverbindungen anschließend nach Einstellung eines schwach sauren bis neutralen pH-Wertes mit den Verbindungen (5a) und (5b) in an und für sich üblicher Verfahrensweise kuppeln, wie beispielsweise bei einer Temperatur zwischen 0 und 30°C, bevorzugt zwischen 10 und 20°C, und bei einem pH-Wert zwischen 3 und 7,5, bevorzugt zwischen 4,5 und 6,5.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 10 bis 80 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.
Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese "Nuancierfarbstoffe" können durch übliches Vermischen hinzugefügt oder aber auch auf chemischem Wege im selben Reaktionsansatz zusammen mit der oben beschriebenen Synthese einer erfindungsgemäßen Farbstoffmischung hergestellt und in die Farbstoffmischung eingebracht werden, wenn eine oder mehrere der Komponenten des Nuancierfarbstoffes mit den Komponenten der Farbstoffe der Formeln (1) und/oder (2) identisch sind.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie bspw. in den PCT-Patentanmeldungs-Veröffentlichungen Nrs. WO 96/37641 und WO 96/37642 sowie in den europäischen Patentanmeldungs-Veröffentlichungen Nrs. 0 538 785 und 0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. Sie zeichnen sich durch einen hervorragenden Farbaufbau aus, weswegen mit ihnen wirtschaftlich besonders vorteilhaft tiefe Nuancen erhalten werden können, insbesondere auch beispielsweise tiefe Brauntöne beim Einsatz mit anderen Farbstoffen in der Trichromiefärbung. Als Kombinationspartner eignen sich hierbei die üblichen Farbstoffe mit einer oder zwei faserreaktiven Gruppe aus der Vinylsulfon-Reihe oder Farbstoffe mit einer faserreaktiven Gruppierung aus der Kombination Monochlortriazin/Vinylsulfonreihe.

So erhält man mit ihnen auf Cellulosefasern nach den Ausziehverfahren sowohl aus kurzer als auch aus langer Flotte, bspw. im Verhältnis Ware zu Flotte von 1 : 5 bis 1 : 100, bevorzugt 1 : 7 bis 1 : 30, unter Verwendung von verschiedensten säurebindenden Mitteln, wie beispielsweise Natriumcarbonat und Natronlauge, und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das die alkalisch wirkenden Mitteln enthaltende Färbebad einbringt und dieses allmählich auf die gewünschte Färbetemperatur erwärmt und den Färbeprozeß bei dieser Temperatur zu Ende führt; auch kann man bevorzugt so verfahren, daß man von einem gegebenenfalls Natriumcarbonat-haltigen Färbebad ausgeht und erst später im Verlaufe des Färbeprozesses das Färbebad mit Natronlauge versetzt.

Die das Ausziehen der Farbstoffe beschleunigenden Neutralsalze können dem Bade gewünschtenfalls auch erst nach Erreichen der eigentlichen Färbetemperatur zugesetzt werden.
Besonders eignen sich die erfindungsgemäßen Mischungen im Ausziehverfahren bei Anwendung der progressiven Dosierung von Natronlauge zum Färbebad gemäß dem sog. ®automet-Verfahren (s. bspw. EP-A-0 126 042 und EP-A-0 259 319) im bevorzugten Temperaturbereich von 45 bis 65°C.
Für solche Auszieh-Färbeverfahren eignen sich insbesondere diejenigen Farbstoffmischungen mit Farbstoffen der allgemeinen Formel (2), in welcher der Formelindex n gleich 1 ist.

Nach den üblichen Klotzverfahren werden auf Cellulosefasern ebenfalls ausgezeichnete Farbausbeuten und ein sehr guter Farbaufbau erhalten. Bevorzugt bringt man die Farbstoffmischung in einer alkalischen, wie bspw. Natriumcarbonat- und Natronlauge-haltigen, Klotzflotte auf das Material und läßt die Farbstoffe auf dem Material durch Verweilen bei erhöhter Temperatur, beispielsweise bis zu etwa 60°C, bevorzugt aber bei Raumtemperatur gemäß dem sog. Klotz-Kaltverweil-Verfahren (KKV-Verfahren) fixieren. Die Fixierung der Farbstoffe auf dem Material kann aber auch in kontinuierlicher Färbeweise, bspw. mittels einem Pad-Dry-Pad-Steam-Verfahren, durch Dämpfen oder mit Trockenhitze in üblicher Weise erfolgen. Für solche Klotzverfahren sind insbesondere erfindungsgemäße Farbstoffmischungen mit Farbstoffen entsprechend der allgemeinen Formel (2) mit n gleich Null vorteilhaft.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilikate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie bspw. Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, gelbe Färbungen mit guten Echtheitseigenschaften und geringer Photochromie.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen werden im allgemeinen in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, genannten Ausgangsverbindungen in Form der freien Säure oder in Form ihrer Salze, vorzugsweise Alkalimetallsalze, wie Natrium- oder Kaliumsalze, in die Synthese eingesetzt werden.

### Beispiel 1

1000 Teile einer wäßrigen Lösung mit 150 Teilen des nachstehend angegebenen Farbstoffes der Formel (A), wie eine Syntheselösung dieses Farbstoffes, und 1000 Teile einer wäßrigen Lösung mit 150 Teilen des nachstehend angegebenen Farbstoffes der Formel (B), wie einer Syntheselösung dieses Farbstoffes 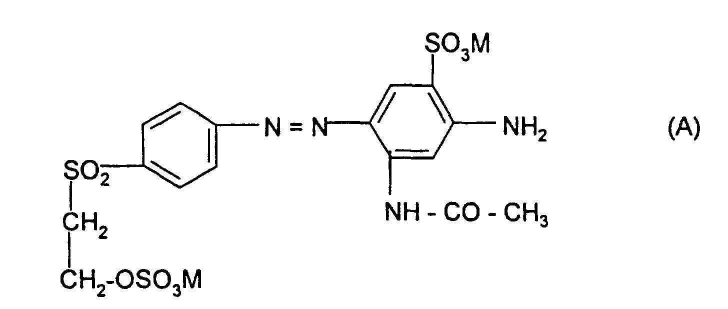 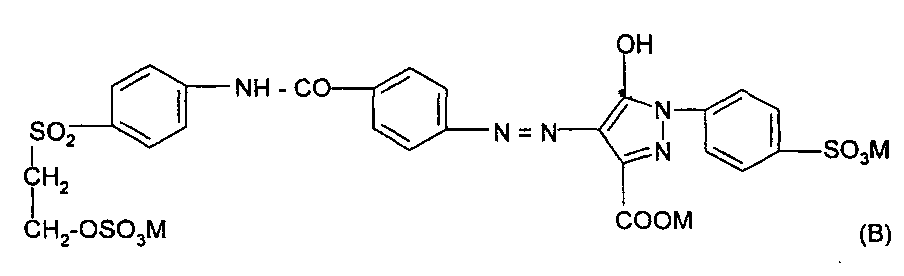 (mit M der obengenannten Bedeutung, bevorzugt Natrium) werden miteinander vermischt.
Man isoliert die erfindungsgemäße Farbstoffmischung in einem molaren Mischungsverhältnis des Farbstoffes (A) zu Farbstoff (B) von 58 : 42 aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielsweise auf cellulosischen Fasermaterialien, wie Baumwolle, oder Celluloseregeneratfasern in einem für faserreaktive Farbstoffe üblichen Auszieh-Färbeverfahren farbstarke und egale gelbe Färbungen.

### Beispiel 2

Man vermischt 1000 Teile einer wäßrigen Syntheselösung mit 59 Teilen des Farbstoffes der in Beispiel 1 genannten Formel (A) mit 500 Teilen einer wäßrigen Syntheselösung mit 63,5 Teilen des Farbstoffes der Formel (C) 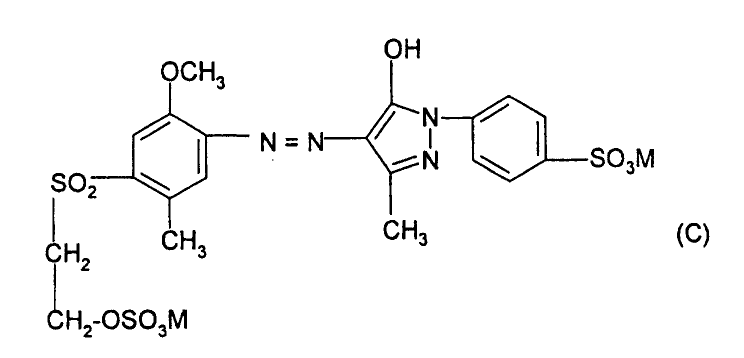 (in welchen M die obengenannte Bedeutung besitzt, bevorzugt Natrium ist) und isoliert die erfindungsgemäße Farbstoffmischung nach Vereinigung der beiden Lösungen in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung mit einem molaren Mischungsverhältnis des Farbstoffes (A) zu Farbstoff (C) von 50 : 50 zeigt sehr gute färberische Eigenschaften und liefert beispielsweise auf cellulosischen Fasermaterialien, wie Baumwolle, oder Celluloseregeneratfasern, im einen für faserreaktive Farbstoffe üblichen Klotz-Kaltverweil-Verfahren farbstarke und egale gelbe Färbungen.

### Beispiele 3 bis 19

In den nachfolgenden Tabellenbeispielen sind weitere erfindungsgemäße Farbstoffmischungen mit den Farbstoffen entsprechend den allgemeinen Formeln (Y) und (Z)

D¹ - N = N - K¹ (Y) D² - N = N - K² (Z)

anhand ihrer Komponenten in dem jeweiligen Tabellenbeispiel beschrieben. Sie lassen sich in erfindungsgemäßer Weise entweder durch mechanische Mischung der Einzelfarbstoffe oder deren Lösungen oder auf chemischen Wege mit Hilfe ihrer Ausgangskomponenten, den Diazokomponenten entsprechend den allgemeinen Formeln D¹-NH₂ und D²-NH₂ und den Kupplungskomponenten der allgemeinen Formeln H-K¹ und H-K² , herstellen.

Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke gelbe Färbungen und Drucke mit guten Echtheitseigenschaften und einem guten Farbaufbau. In der Rubrik MV wird das molare Mischungsverhältnis der beiden Farbstoffe zueinander in Mol-% angegeben.

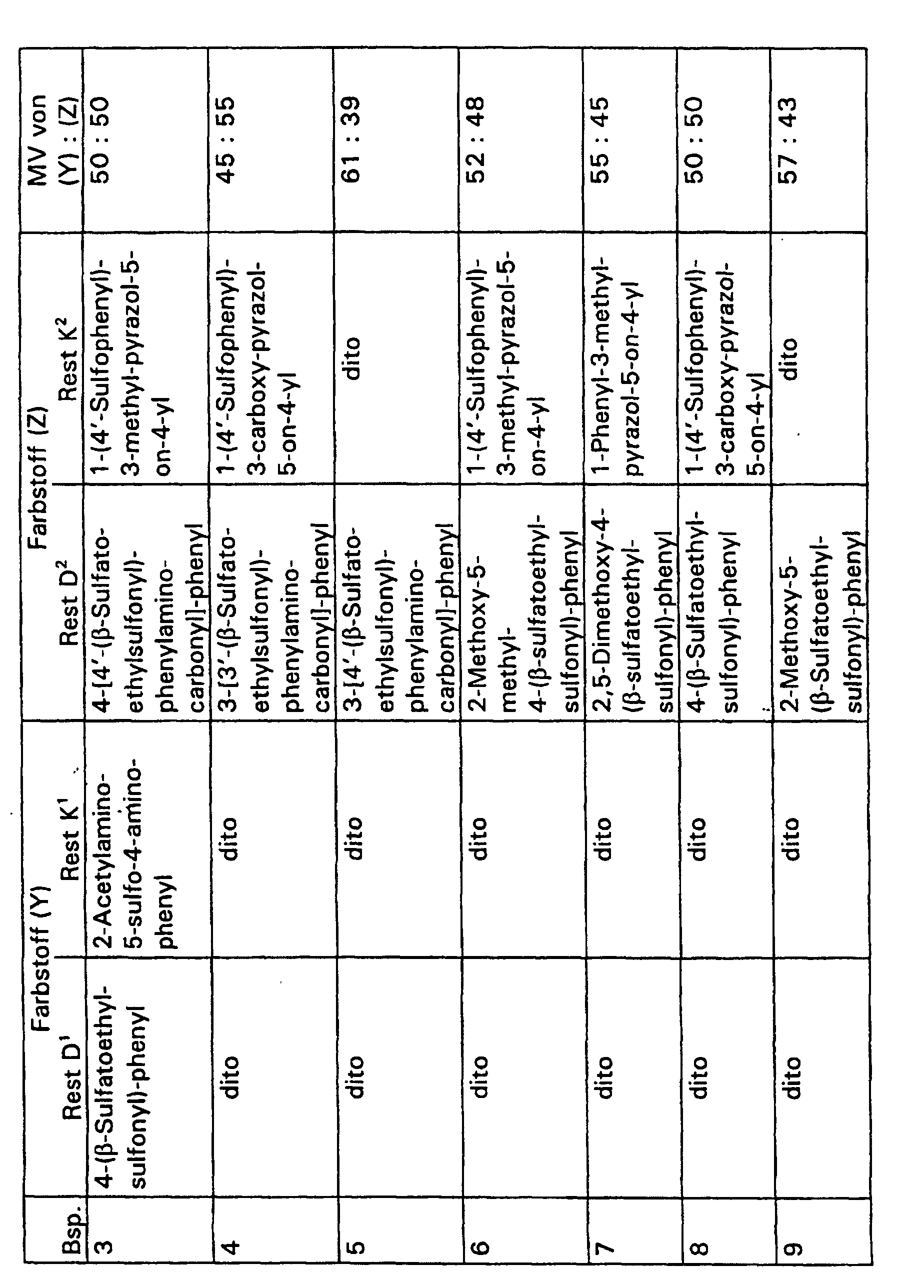

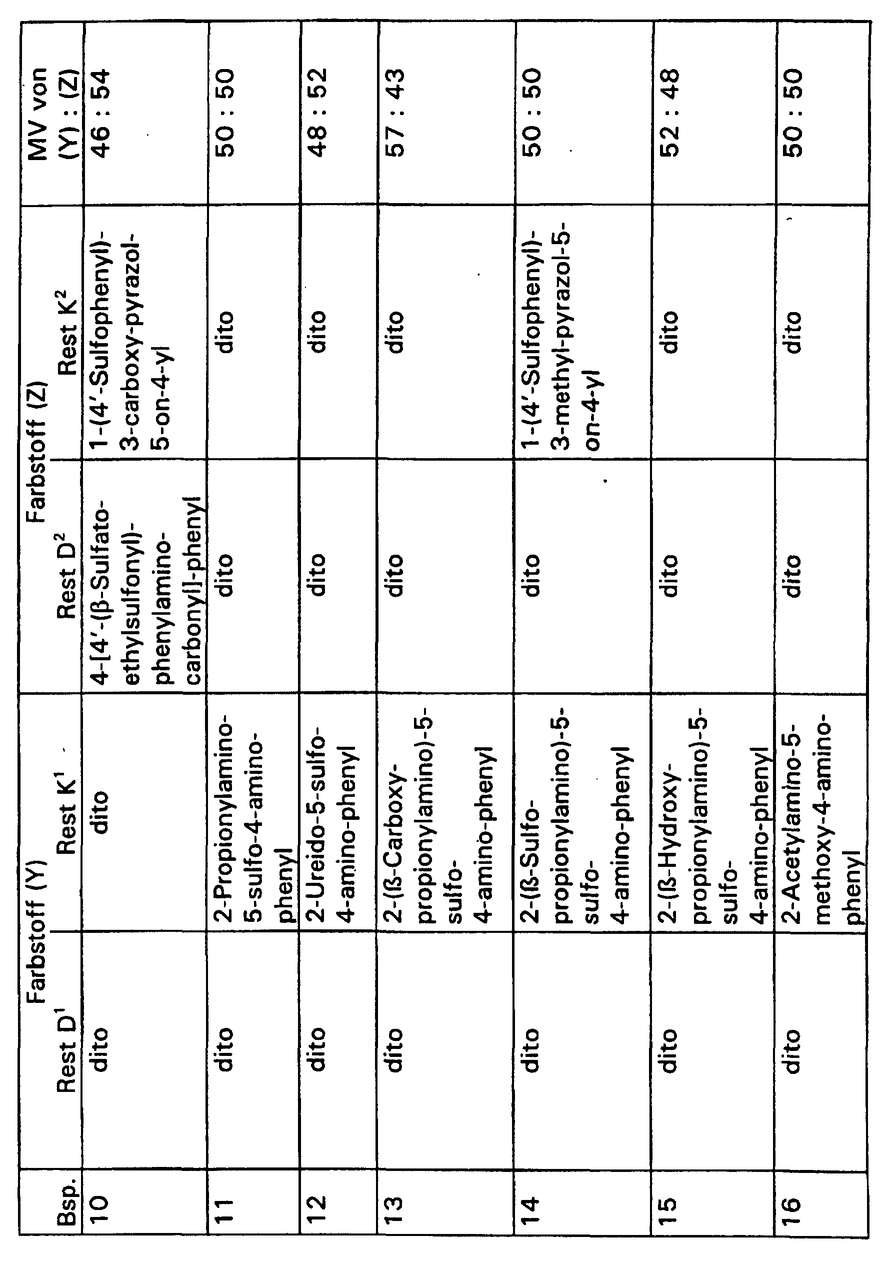

## Patentansprüche

1. Farbstoffmischungen, enthaltend einen oder mehrere Farbstoffe aus der Gruppe der Farbstoffe der nachstehend angegebenen und definierten allgemeinen Formel (1) und einen oder mehrere Farbstoffe aus der Gruppe der Farbstoffe der nachstehend angegebenen und definierten allgemeinen Formel (2) im molaren Verhältnis des/der Farbstoff(e) (1) zu dem/den Farbstoff(en) (2) von 75 : 25 bis 25 : 75 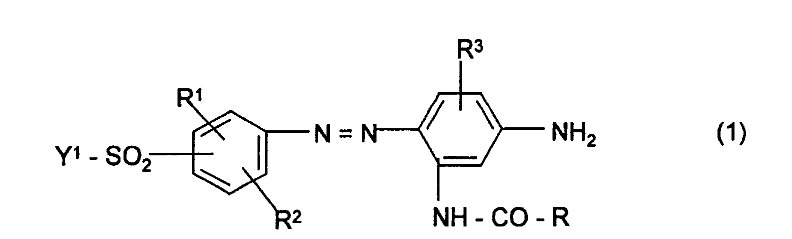 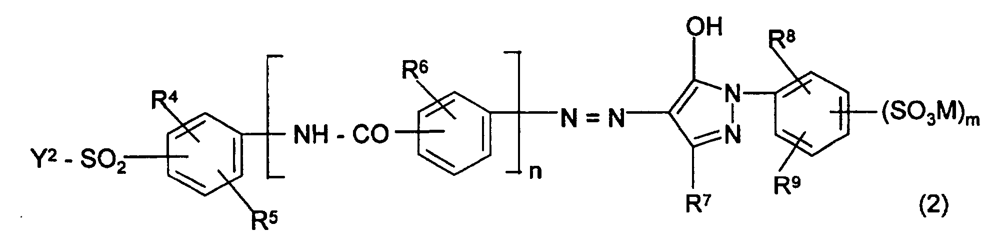 worin bedeuten:
M ist Wasserstoff oder ein Alkalimetall;
Y¹ ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy;
Y² hat eine der Bedeutungen von Y¹;
R¹ ist Wasserstoff, Chlor, Alkyl von 1 bis 4 C-Atomen, Alkoxy von 1 bis 4 C-Atomen oder Sulfo;
R² ist Wasserstoff, Alkyl von 1 bis 4 C-Atomen oder Alkoxy von 1 bis 4 C-Atomen;
R³ ist Wasserstoff, Alkyl von 1 bis 4 C-Atomen, Alkoxy von 1 bis 4 C-Atomen oder Sulfo;
R ist Amino oder Alkyl von 1 bis 6 C-Atomen, das substituiert sein kann, beispielsweise durch Hydroxy, Sulfo, Carboxy, Sulfato, Phosphato oder eine Gruppe -SO₂-Y³ mit Y³ einer Bedeutung von Y¹;
R⁴ ist Wasserstoff, Chlor, Alkyl von 1 bis 4 C-Atomen, Alkoxy von 1 bis 4 C-Atomen oder Sulfo;
R⁵ ist Wasserstoff, Alkyl von 1 bis 4 C-Atomen, oder Alkoxy von 1 bis 4 C-Atomen;
R⁶ ist Wasserstoff, Alkyl von 1 bis 4 C-Atomen, Alkoxy von 1 bis 4 C-Atomen oder Sulfo;
n ist die Zahl Null oder 1;
R⁷ ist Methyl oder Carboxy;
R⁸ ist Wasserstoff, Alkyl von 1 bis 4 C-Atomen, Alkoxy von 1 bis 4 C-Atomen oder Chlor;
R⁹ ist Wasserstoff, Alkyl von 1 bis 4 C-Atomen, oder Alkoxy von 1 bis 4 C-Atomen;
m ist die Zahl Null, 1 oder 2 (wobei im Falle von m gleich Null diese Gruppe für Wasserstoff steht).

2. Farbstoffmischung nach Anspruch 1, **dadurch gekennzeichnet, daß** R¹ und R² beide Wasserstoff sind.

3. Farbstoffmischung nach Anspruch 1 oder 2, **dadurch gekennzeichnet, daß** R Methyl ist.

4. Farbstoffmischung nach mindestens einem der Ansprüche 1 bis 3, **dadurch gekennzeichnet, daß** R³ Sulfo ist und in para-Stellung zur Gruppe -NH-CO-R steht.

5. Farbstoffmischung nach mindestens einem der Ansprüche 1 bis 4, **dadurch gekennzeichnet, daß** R⁴ und R⁵ beide für Wasserstoff stehen.

6. Farbstoffmischung nach mindestens einem der Ansprüche 1 bis 5, **dadurch gekennzeichnet, daß** R⁸ und R⁹ beide für Wasserstoff stehen und m die Zahl 1 bedeutet.

7. Farbstoffmischung nach mindestens einem der Ansprüche 1 bis 6, **dadurch gekennzeichnet, daß** n für die Zahl Null steht.

8. Farbstoffmischung nach mindestens einem der Ansprüche 1 bis 6, **dadurch gekennzeichnet, daß** n die Zahl 1 ist und R⁶ Wasserstoff bedeutet.

9. Farbstoffmischung nach mindestens einem der Ansprüche 1 bis 8, **dadurch gekennzeichnet, daß** die Gruppen Y¹-SO₂- und Y²-SO₂- an den Benzolkern in para-Stellung zur Azogruppe bzw. zur Gruppe -NH-CO- gebunden sind.

10. Farbstoffmischung nach mindestens einem der Ansprüche 1 bis 9, **dadurch gekennzeichnet, daß** Y¹ und Y² beide, unabhängig voneinander, Vinyl, β-Chlorethyl oder β-Sulfatoethyl bedeuten.

11. Farbstoffmischung nach Anspruch 1, **dadurch gekennzeichnet, daß** in dem Farbstoff der allgemeinen Formel (1) die Gruppe Y¹-SO₂- in meta- oder para-Stellung zur Azogruppe steht, Y¹ β-Sulfatoethyl ist, R¹ und R² beide Wasserstoff bedeuten, R Methyl ist und R³ in para-Stellung zur Gruppe -NH-CO-R an den Benzolkern gebunden ist und Sulfo bedeutet.

12. Farbstoffmischung nach Anspruch 1, **dadurch gekennzeichnet, daß** in dem Farbstoff der allgemeinen Formel (2) der Formelindex n gleich Null ist, die Gruppe Y²-SO₂- in meta- oder para-Stellung zur Azogruppe gebunden ist, R⁴ Wasserstoff, Methyl oder Methoxy bedeutet, R⁵ Wasserstoff oder Methyl ist, R⁸ und R⁹ beide Wasserstoff bedeuten und m die Zahl 1 ist, wobei diese Sulfogruppe in para-Stellung zum N-Atom des Pyrazolonringes an den Benzolkern gebunden ist.

13. Farbstoffmischung nach Anspruch 12, **dadurch gekennzeichnet, daß** R⁴ und R⁵ beide Wasserstoff bedeuten und die Gruppe Y²-SO₂- in para-Stellung zur Azogruppe gebunden ist.

14. Farbstoffmischung nach Anspruch 1, **dadurch gekennzeichnet, daß** in den Farbstoffen der allgemeinen Formel (2) der Formelindex n gleich 1 ist, R⁴ und R⁵ beide Wasserstoff bedeuten, die Gruppe Y²-SO₂- in para-Stellung zur Gruppe -NH-CO- steht, Y² β-Sulfatoethyl ist, die Gruppe -NH-CO- in para-Stellung zur Azogruppe gebunden ist, R⁶, R⁸ und R⁹ jedes Wasserstoff bedeuten und m die Zahl 1 ist und diese Sulfogruppe in para-Stellung zum N-Atom des Pyrazolonringes an den Benzolkern gebunden ist.

15. Farbstoffmischung nach Anspruch 1, enthaltend einen Farbstoff der Formel (A) und einen Farbstoff der Formel (B) 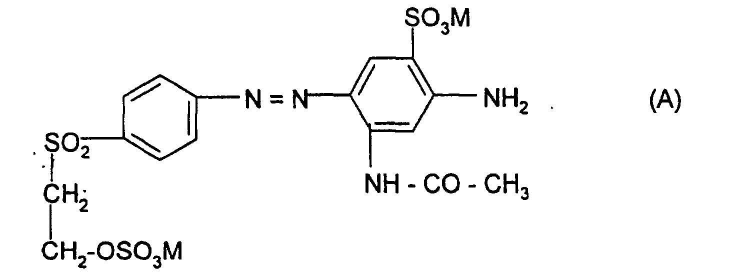 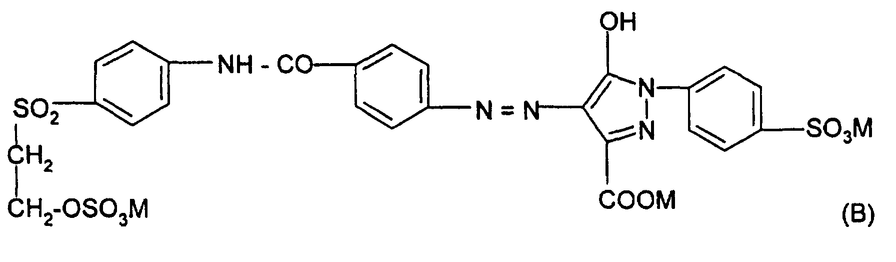 in welchen M die in Anspruch 1 genannte Bedeutung hat.

16. Farbstoffmischung nach Anspruch 1, enthaltend einen Farbstoff der Formel (A) und einen Farbstoff der Formel (C) 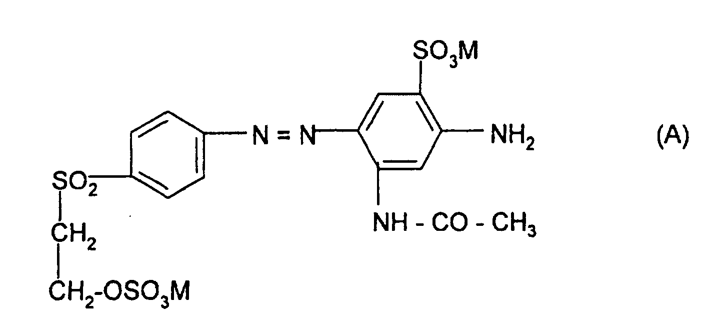 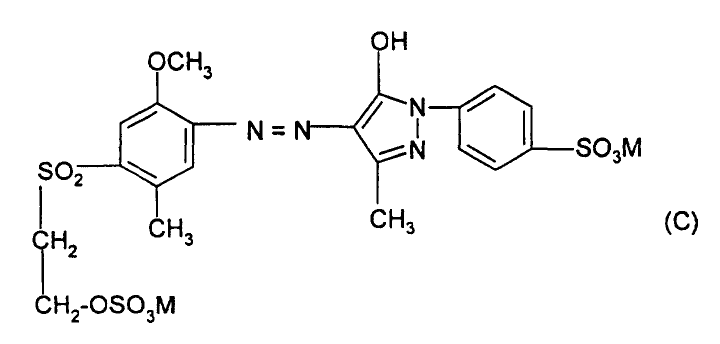 in welchen M die in Anspruch 1 genannte Bedeutung hat.

17. Farbstoffmischung nach mindestens einem der Ansprüche 1 bis 16, **dadurch gekennzeichnet, daß** der oder die Farbstoffe der allgemeinen Formel (1) und der oder die Farbstoffe der allgemeinen Formel (2) in einem molaren Mischungsverhältnis von 60 : 40 bis 40 : 60 vorliegen.

18. Verwendung einer Farbstoffmischung von Anspruch 1 zum Färben von hydroxy- und/oder carbonamidgruppenhaltigem Material, insbesondere Fasermaterial.

19. Verfahren zum Färben von hydroxy- und/oder carbonamidgruppenhaltigem Material, insbesondere Fasermaterial, bei welchem man einen oder mehrere Farbstoffe auf das Material aufbringt und diese auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von Anspruch 1 oder eine oder mehrere Farbstoffe der in Anspruch 1 definierten allgemeinen Formel (1) und einen oder mehrere Farbstoffe der in Anspruch 1 definierten allgemeinen Formel (2) einzeln zusammen einsetzt.

## Claims

1. A dye mixture comprising one or more dyes selected from the group of the dyes of the hereinbelow indicated and defined general formula (1) and one or more dyes selected from the group of the dyes of the hereinbelow indicated and defined general formula (2) in a molar ratio of the dye or dyes (1) to the dye or dyes (2) of 75:25 to 25:75 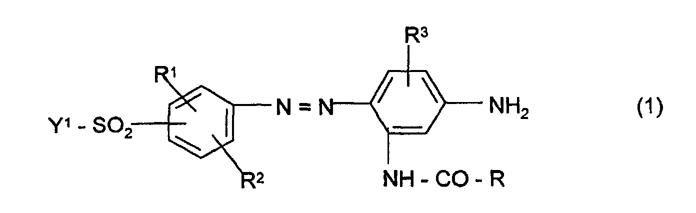 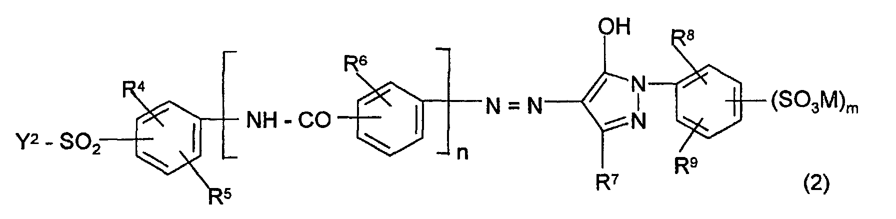 where:
M is hydrogen or an alkali metal;
Y¹ is vinyl or is ethyl which is substituted in the β-position by an alkali-eliminable substituent, for example by chlorine, sulfato, thiosulfato, phosphato, alkanoyloxy of 2 to 5 carbon atoms, such as acetyloxy, and sulfobenzoyloxy;
Y² has one of the meanings of Y¹;
R¹ is hydrogen, chlorine, alkyl of 1 to 4 carbon atoms, alkoxy of 1 to 4 carbon atoms or sulfo;
R² is hydrogen, alkyl of 1 to 4 carbon atoms or alkoxy of 1 to 4 carbon atoms;
R³ is hydrogen, alkyl of 1 to 4 carbon atoms, alkoxy of 1 to 4 carbon atoms or sulfo;
R is amino or alkyl of 1 to 6 carbon atoms which may be substituted, for example by hydroxyl, sulfo, carboxyl, sulfato, phosphato or a -SO₂-Y³ group, where Y³ is Y¹;
R⁴ is hydrogen, chlorine, alkyl of 1 to 4 carbon atoms, alkoxy of 1 to 4 carbon atoms or sulfo;
R⁵ is hydrogen, alkyl of 1 to 4 carbon atoms, or alkoxy of 1 to 4 carbon atoms;
R⁶ is hydrogen, alkyl of 1 to 4 carbon atoms, alkoxy of 1 to 4 carbon atoms or sulfo;
n is zero or 1;
R⁷ is methyl or carboxyl;
R⁸ is hydrogen, alkyl of 1 to 4 carbon atoms, alkoxy of 1 to 4 carbon atoms or chlorine;
R⁹ is hydrogen, alkyl of 1 to 4 carbon atoms or alkoxy of 1 to 4 carbon atoms;
m is zero, 1 or 2 (when m is zero, this group is hydrogen).

2. A dye mixture as claimed in claim 1, wherein R¹ and R² are both hydrogen.

3. A dye mixture as claimed in claim 1 or 2, wherein R is methyl.

4. A dye mixture as claimed in at least one of claims 1 to 3, wherein R³ is sulfo and disposed para to the -NH-CO-R group.

5. A dye mixture as claimed in at least one of claims 1 to 4, wherein R⁴ and R⁵ are both hydrogen.

6. A dye mixture as claimed in at least one of claims 1 to 5, wherein R⁸ and R⁹ are both hydrogen and m is 1.

7. A dye mixture as claimed in at least one of claims 1 to 6, wherein n is zero.

8. A dye mixture as claimed in at least one of claims 1 to 6, wherein n is 1 and R⁶ is hydrogen.

9. A dye mixture as claimed in at least one of claims 1 to 8, wherein the Y¹-SO₂- and Y²-SO₂- groups are attached to the benzene nucleus in a position which is para to the azo group and to the -NH-CO- group, respectively.

10. A dye mixture as claimed in at least one of claims 1 to 9, wherein Y¹ and Y² are independently vinyl, β-chloroethyl or β-sulfatoethyl.

11. A dye mixture as claimed in claim 1, wherein, in the dye of the general formula (1), the Y¹-SO₂- group is meta or para to the azo group, Y¹ is β-sulfatoethyl, R¹ and R² are both hydrogen, R is methyl and R³ is attached to the benzene nucleus para to the -NH-CO-R group and is sulfo.

12. A dye mixture as claimed in claim 1, wherein, in the dye of the general formula (2), the formula index n is zero, the Y²-SO₂- group is meta or para to the azo group, R⁴ is hydrogen, methyl or methoxy, R⁵ is hydrogen or methyl, R⁸ and R⁹ are both hydrogen and m is 1, this sulfo group being attached to the benzene nucleus in a position which is para to the nitrogen atom of the pyrazolone ring.

13. A dye mixture as claimed in claim 12, wherein R⁴ and R⁵ are both hydrogen and the Y²-SO₂- group is para to the azo group.

14. A dye mixture as claimed in claim 1, wherein, in the dyes of the general formula (2), the formula index n is 1, R⁴ and R⁵ are both hydrogen, the Y²-SO₂- group is para to the -NH-CO- group, Y² is β-sulfatoethyl, the -NH-CO- group is para to the azo group, R⁶, R⁸ and R⁹ are each hydrogen and m is 1 and this sulfo group is attached to the benzene nucleus in a position which is para to the nitrogen atom of the pyrazolone ring.

15. A dye mixture as claimed in claim 1, comprising a dye of the formula (A) and a dye of the formula (B) 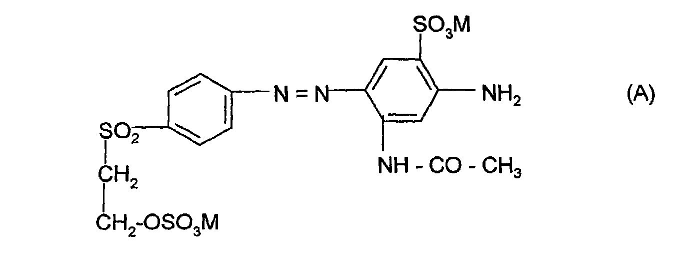 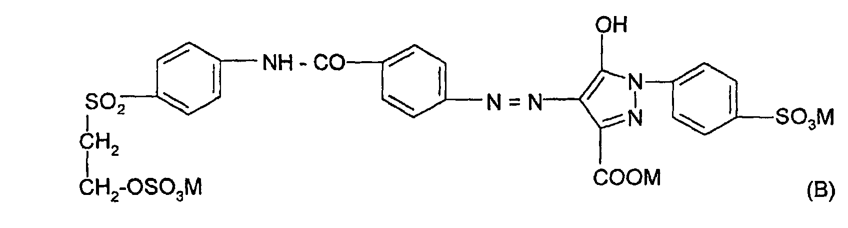 where M is as defined in claim 1.

16. A dye mixture as claimed in claim 1, comprising a dye of the formula (A) and a dye of the formula (C) 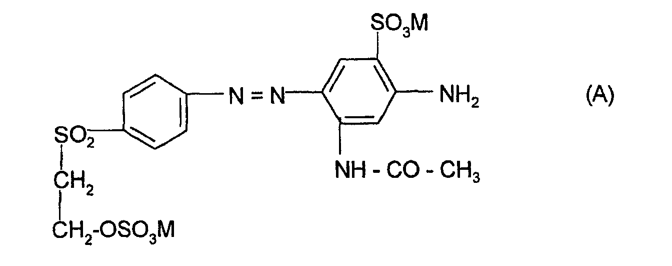 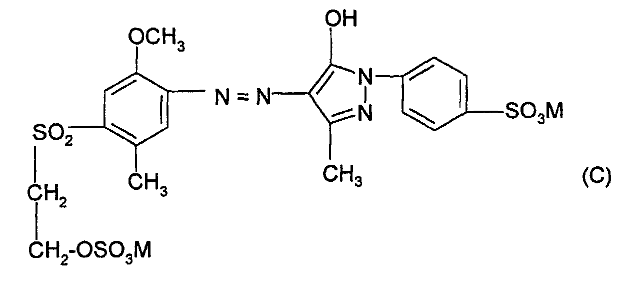 where M is as defined in claim 1.

17. A dye mixture as claimed in at least one of claims 1 to 16, wherein the dye or dyes of the general formula (1) and the dye or dyes of the general formula (2) are present in a molar mixing ratio of 60:40 to 40:60.

18. The use of a dye mixture as claimed in claim 1 for dyeing hydroxyl- and/or carboxamido-containing material, especially fiber material.

19. A process for dyeing hydroxyl- and/or carboxamido-containing material, especially fiber material, by applying one or more dyes to the material and fixing them on the material by means of heat or with an alkaline agent or by means of both measures, which comprises using as dyes a dye mixture of claim 1 or one or more dyes of the general formula (1) defined in claim 1 and one or more dyes of the general formula (2) defined in claim 1 individually together.

## Revendications

1. Mélanges de colorants, contenant un ou plusieurs colorants du groupe des colorants de formule générale (1) indiquée et définie ci-dessous et un ou plusieurs colorants du groupe des colorants de formule générale (2) indiquée et définie ci-dessous dans un rapport molaire colorant(s) (1) à colorant(s) (2) de 75:25 à 25:75 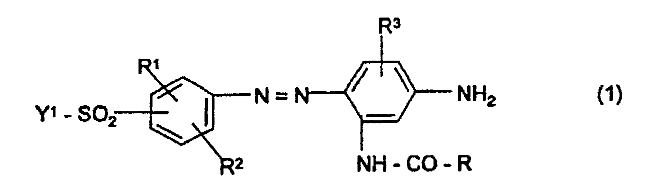 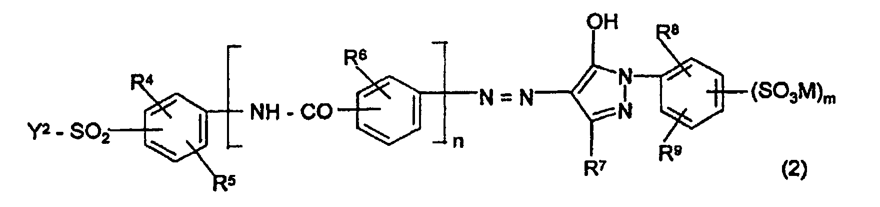 dans lesquelles :
M représente un hydrogène ou un métal alcalin ;
Y¹ représente un vinyle ou un éthyle qui est substitué en position β par un substituant pouvant être éliminé de manière alcaline, tel que par exemple par un chlore, un sulfato, un thiosulfato, un phosphato, un alcanoyloxy de 2 à 5 atomes de C, tel qu'un acétyloxy, et un sulfobenzoyloxy ;
Y² a une des significations de Y¹ ;
R¹ représente un hydrogène, un chlore, un alkyle de 1 à 4 atomes de C, un alcoxy de 1 à 4 atomes de C ou un sulfo ;
R² représente un hydrogène, un alkyle de 1 à 4 atomes de C ou un alcoxy de 1 à 4 atomes de C ;
R³ représente un hydrogène, un alkyle de 1 à 4 atomes de C, un alcoxy de 1 à 4 atomes de C ou un sulfo ;
R représente un amino ou un alkyle de 1 à 6 atomes de C, qui peut avoir été substitué, par exemple par un hydroxy, un sulfo, un carboxy, un sulfato, un phosphato ou un groupement -SO₂-Y³ avec Y³ d'une signification de Y¹ ;
R⁴ représente un hydrogène, un chlore, un alkyle de 1 à 4 atomes de C, un alcoxy de 1 à 4 atomes de C ou un sulfo ;
R⁵ représente un hydrogène, un alkyle de 1 à 4 atomes de C ou un alcoxy de 1 à 4 atomes de C ;
R⁶ représente un hydrogène, un alkyle de 1 à 4 atomes de C, un alcoxy de 1 à 4 atomes de C ou un sulfo ;
n est le nombre zéro ou 1 ;
R⁷ représente un méthyle ou un carboxy ;
R⁸ représente un hydrogène, un alkyle de 1 à 4 atomes de C, un alcoxy de 1 à 4 atomes de C ou un chlore ;
R⁹ représente un hydrogène, un alkyle de 1 à 4 atomes de C ou un alcoxy de 1 à 4 atomes de C ;
m représente le nombre zéro, 1 ou 2 (où, lorsque m est égal à zéro, ce groupe représentant un hydrogène).

2. Mélange de colorants selon la revendication 1, **caractérisé en ce que** R¹ et R² représentent tous les deux un hydrogène.

3. Mélange de colorants selon les revendications 1 ou 2, **caractérisé en ce que** R est un méthyle.

4. Mélange de colorants selon au moins l'une quelconque des revendications 1 à 3, **caractérisé en ce que** R³ est un sulfo et est en position para par rapport au groupement -NH-CO-R.

5. Mélange de colorants selon au moins l'une quelconque des revendications 1 à 4, **caractérisé en ce que** R⁴ et R⁵ représentent tous les deux un hydrogène.

6. Mélange de colorants selon au moins l'une quelconque des revendications 1 à 5, **caractérisé en ce que** R⁸ et R⁹ représentent tous les deux un hydrogène et m signifie le nombre 1.

7. Mélange de colorants selon au moins l'une quelconque des revendications 1 à 6, **caractérisé en ce que** n représente le nombre zéro.

8. Mélange de colorants selon au moins l'une quelconque des revendications 1 à 6, **caractérisé en ce que** n représente le nombre 1 et R⁶ signifie un hydrogène.

9. Mélange de colorants selon au moins l'une quelconque des revendications 1 à 8, **caractérisé en ce que** les groupements Y¹-SO₂- et Y²-SO₂- sont liés sur le cycle benzène en position para par rapport au groupement azo ou, selon le cas, au groupement -NH-CO-.

10. Mélange de colorants selon au moins l'une quelconque des revendications 1 à 9, **caractérisé en ce que** Y¹ et Y² signifient tous les deux, indépendamment l'un de l'autre, des vinyle, β-chloroéthyle ou β-sulfatoéthyle.

11. Mélange de colorants selon la revendication 1, **caractérisé en ce que** dans le colorant de formule générale (1), le groupement Y¹-SO₂- est en position méta ou para par rapport au groupement azo, Y¹ est un β-sulfatoéthyle, R¹ et R² signifient tous les deux un hydrogène, R représente un méthyle et R³ est lié en position para par rapport au groupement -NH-CO-R au noyau benzène et signifie un sulfo.

12. Mélange de colorants selon la revendication 1, **caractérisé en ce que** dans le colorant de formule générale (2), l'indice de formule n est égal à zéro, le groupement Y²-SO₂- est lié en position méta ou para par rapport au groupement azo, R⁴ signifie un hydrogène, un méthyle ou un méthoxy, R⁵ représente un hydrogène ou un méthyle, R⁸ et R⁹ signifient tous les deux un hydrogène et m représente le nombre 1, ce groupement sulfo étant lié en position para par rapport à l'atome N du cycle pyrazolone sur le cycle benzène.

13. Mélange de colorants selon la revendication 12, **caractérisé en ce que** R⁴ et R⁵ signifient tous les deux un hydrogène et le groupement Y²-SO₂- est lié en position para par rapport au groupement azo.

14. Mélange de colorants selon la revendication 1, **caractérisé en ce que** dans les colorants de formule générale (2), l'indice de formule n est égal à 1, R⁴ et R⁵ signifient tous les deux un hydrogène, le groupement Y²-SO₂- est en position para par rapport au groupement -NH-CO-, Y² représente un β-sulfatoéthyle, le groupement -NH-CO- est lié en position para par rapport au groupement azo, R⁶, R⁸ et R⁹ signifient chacun un hydrogène et m représente le nombre 1 et ce groupement sulfo est lié en position para par rapport à l'atome N du cycle pyrazolone sur le cycle benzène.

15. Mélange de colorants selon la revendication 1, contenant un colorant de formule (A) et un colorant de formule (B) 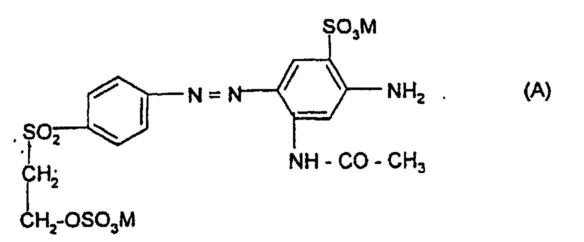 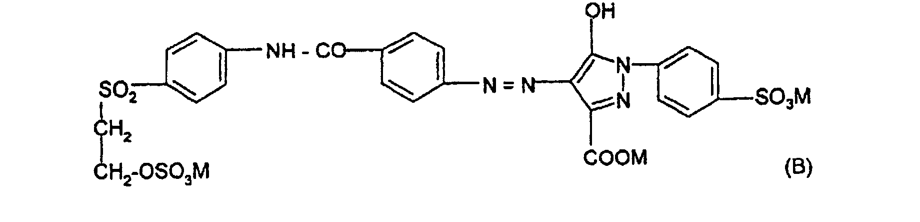 dans lesquelles M a la signification mentionnée dans la revendication 1.

16. Mélange de colorants selon la revendication 1, contenant un colorant de formule (A) et un colorant de formule (C) 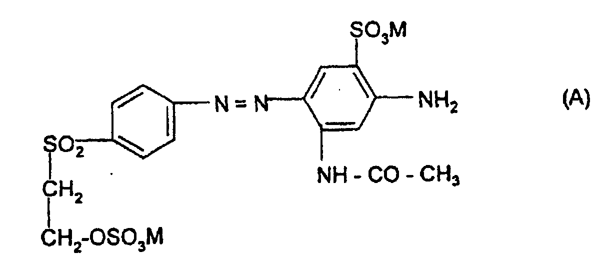 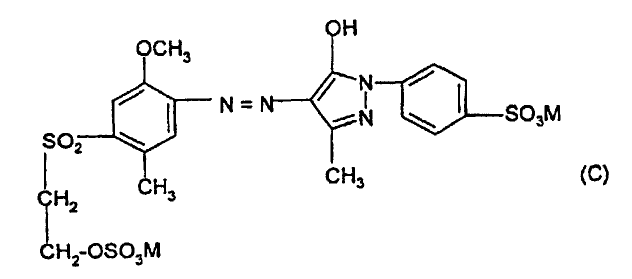 dans lesquelles M a la signification mentionnée dans la revendication 1.

17. Mélange de colorants selon au moins l'une quelconque des revendications 1 à 16, **caractérisé en ce que** le ou les colorants de formule générale (1) et le ou les colorants de formule générale (2) se trouvent dans un dosage molaire de 60:40 à 40:60.

18. Utilisation d'un mélange de colorants de la revendication 1 pour la teinture de matériau contenant des groupements hydroxy et/ou carboxamide, en particulier un matériau fibreux.

19. Procédé pour la teinture d'un matériau contenant des groupements hydroxy et/ou carboxamide, en particulier un matériau fibreux, dans lequel on applique un ou plusieurs colorants sur le matériau et on fixe celui-ci ou ceux-ci sur le matériau au moyen de chaleur ou à l'aide d'un agent à action alcaline ou au moyen des deux mesures, **caractérisé en ce qu'**on utilise en tant que colorants un mélange de colorants de la revendication 1 ou un ou plusieurs colorants individuels de la formule générale (1) définie dans la revendication 1 et un ou plusieurs colorants individuels de la formule générale (2) définie dans la revendication 1 ensemble.
